# EUROPEAN PATENT APPLICATION

(11) **EP 4 825 900 A1**
(43) Date of publication of application: **21.10.2026**
(21) Application number: 24918929.1
(22) Date of filing: 30.08.2024
(51) Int. Cl.: C08J 9/20, C08J 9/18, C08J 9/228, C08J 9/14, C08F 257/02, C08F 212/08

(54) **CORE-SHELL-STRUCTURED EXPANDED POLYSTYRENE PARTICLE AND POLYSTYRENE FOAM PRODUCED THEREFROM**

(30) Priority: 16.01.2024 KR 20240006391
(71) Applicant: LG Electronics Inc., Yeongdeungpo-gu Seoul 07336 (KR)
(72) Inventor: LEE, Misun, Seoul 06772 (KR); JUNG, Kyungho, Seoul 06772 (KR); LEE, Dongwook, Seoul 06772 (KR); LEE, Juchul, Seoul 06772 (KR); KWON, Junhan, Seoul 06772 (KR)
(74) Representative: Vossius & Partner Patentanwälte Rechtsanwälte mbB
(86) International application number: PCT/KR2024/012992
(87) International publication number: WO 2025/154895

(57) **Abstract**

The present invention relates to a core-shell-structured expanded polystyrene particle and a polystyrene foam produced therefrom, and, more specifically, to a core-shell-structured expanded polystyrene particle and a polystyrene foam produced therefrom, the expanded polystyrene particle having physical properties, such as moisture content of the polystyrene foam produced therefrom, that are improved due to the density difference between a core and a shell, thereby having long-term product packaging performance.

## Description

### [Technical Field]

The present invention relates to a core-shell-structured expandable polystyrene particle and a polystyrene foam produced therefrom, and, more specifically, to a core-shell-structured expandable polystyrene particle and a polystyrene foam produced therefrom, in which physical properties, such as the moisture content of the polystyrene foam produced therefrom, are improved due to a density difference between a core and a shell, thereby providing long-term product packaging performance.

### [Background Art]

Recently, as environmental regulations have been strengthened, demand for eco-friendly packaging materials for reducing carbon emissions has been continuously growing, and accordingly, interest in making cushioning packaging materials for packaging heavy medium- to large-sized products more eco-friendly has also greatly increased. Among cushioning packaging materials, the most representative one is polystyrene foam manufactured from expandable polystyrene (EPS) particles. Due to its excellent cushioning performance, there is currently no substitute comparable thereto, and thus there is a need to develop a technology for recycling such waste polystyrene foam without deterioration of physical properties.

Expandable polystyrene (EPS) particles are spherical plastic particles having a diameter of about 0.2 mm to 2 mm, and are polymers of styrene monomers, which are raw materials of polystyrene foam. Since an expandable gas is contained inside the particles, the particles can be expanded up to about 130 times when heated with steam. The expanded particles are injected into a mold, heated again with steam, and molded into a predetermined shape, and are then used as packaging materials or the like.

A conventional expandable polystyrene particle has a cross-sectional structure composed entirely of polystyrene having the same density, without distinction between core and shell layers. Due to the same density inside the particle, uniformity in cushioning performance is ensured; however, when the particle is expanded by introducing a blowing agent, the particle expands into a spherical shape, and therefore void spaces between the particles are inevitably formed to a certain extent. Accordingly, moisture penetrates into the void spaces, causing an increase in moisture content.

Since such polystyrene foam has a wide range of uses, waste polystyrene foam is discharged in enormous amounts. Due to its property of not decaying or decomposing, waste disposal by landfill causes another form of pollution. In addition, incineration has a disadvantage of harming the environment because it generates and emits harmful gases and smoke, and thus polystyrene foam is known as a chemical product that is not easy to reprocess.

Recently, attempts have been made to recycle waste polystyrene foam; however, there has been a problem in that mechanical properties deteriorate when waste polystyrene foam is recycled. Accordingly, there is a need to develop a technology that can satisfy economic feasibility (costs) and production processability requirements while preventing deterioration of physical properties when waste polystyrene foam is recycled.

### [Disclosure]

### [Technical Problem]

An object of the present invention is to provide core-shell-structured expandable polystyrene particles, a polystyrene foam produced therefrom, and methods for manufacturing the same, in which, during formation of the foam, a shell having a lower density is over-expanded relative to a core, thereby minimizing spaces between adjacent particles and improving physical properties such as moisture content.

However, the technical problems to be achieved by the present invention are not limited to the problems mentioned above, and other problems not mentioned herein will be clearly understood by those of ordinary skill in the art from the following description.

### [Technical Solution]

To achieve the above object, the present invention is characterized by an expandable polystyrene particle comprising a core of a polystyrene material and a shell of a polystyrene material coating the core, wherein the density of the core is greater than the density of the shell.

The density of the core may be 1.2 to 2.0 times the density of the shell.

The core may be manufactured from waste polystyrene foam, and more specifically, may be formed by pulverizing or re-extruding an ingot formed through a volume-reduction treatment in which a predetermined amount of heat is applied to polystyrene foam.

The shell may be formed by polymerizing a styrene monomer on the core.

Another aspect of the present invention for achieving the above object relates to a polystyrene foam formed by expanding the polystyrene particles.

The polystyrene foam may have a moisture content of 5% or less.

Another aspect of the present invention for achieving the above object provides a method for manufacturing expandable polystyrene particles, the method comprising: preparing an ingot through a volume-reduction treatment in which heat or pressure is applied to polystyrene foam to reduce the volume thereof; extruding the prepared ingot to prepare a core pelletized to a predetermined size; and introducing the core and a styrene monomer into a reactor and then performing suspension polymerization to manufacture polystyrene particles having a core-shell structure.

During the volume-reduction treatment or a process of pelletizing the core, an antioxidant may be added to prevent a decrease in molecular weight.

Another aspect of the present invention for achieving the above object provides a method for manufacturing an expanded polystyrene molded article, the method comprising: pre-expanding and aging the expandable polystyrene particles manufactured according to the above-described method; and foam-molding the aged polystyrene particles in a molding machine under a predetermined pressure.

### [Advantageous Effects]

The polystyrene foam manufactured according to the present invention has an effect of greatly improving moisture content by preventing moisture penetration, by minimizing gap spaces between adjacent particles due to over-expansion of the particle shell resulting from the density difference provided by the core-shell structure, as compared with a conventional polystyrene foam.

Accordingly, the polystyrene foam can be used as a high-performance cushioning packaging material for medium- to large-sized home appliances, with enhanced long-term product packaging performance.

In addition, when the core is manufactured from waste polystyrene foam, not only environmental friendliness can be imparted, but also physical properties can be further improved as compared with virgin polystyrene foam.

### [Description of Drawings]

FIG. 1 is a conceptual view of core-shell-structured expandable polystyrene (EPS) particles according to the present invention.
FIG. 2 is a flowchart comparatively illustrating manufacturing processes of conventional EPS particles (single spherical particles) and core-shell-structured EPS particles according to the present invention.

### [Mode for Invention]

The specific embodiments described in the present specification are intended to represent preferred implementations or examples of the present invention, and the scope of the present invention is not limited thereby. It will be apparent to those skilled in the art that modifications and other uses of the present invention do not depart from the scope of the invention described in the claims of the present specification.

Hereinafter, the present invention will be described in detail with reference to the drawings.

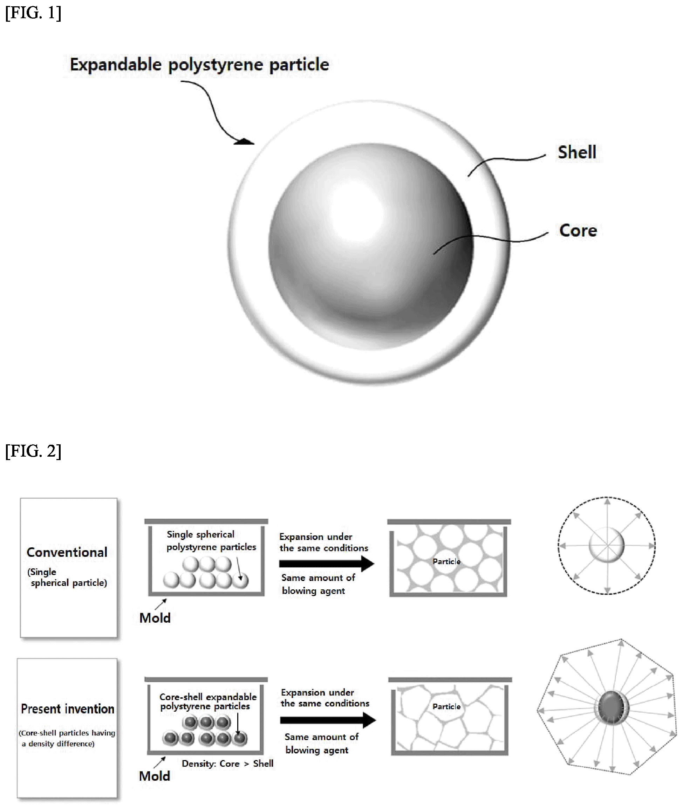

FIG. 1 is a conceptual view of a core-shell-structured expandable polystyrene particle according to the present invention. The expandable polystyrene particle is formed to include a core (100) of a polystyrene material and a shell (200) of a polystyrene material coating the core, and the density of the core (100) is greater than the density of the shell (200). Preferably, the density of the core may be 1.2 to 2.0 times the density of the shell. If the core/shell density ratio is less than 1.2, the difference in expansion between the core and the shell is not large, and thus spaces between particles may be largely formed during expansion. If the core/shell density ratio is greater than 2.0, expansion of the core portion may hardly proceed due to the high density thereof, and thus overall bead expandability may deteriorate.

The core is preferably manufactured from waste polystyrene foam. This is because, in addition to improving environmental friendliness resulting from the use of waste polystyrene foam, degradation and densification of the polystyrene polymer proceed during a volume-reduction step of reducing the volume of the waste polystyrene foam by applying heat thereto, and during an extrusion step of pulverizing or re-extruding an ingot generated from the volume-reduction step into particles, and thus the core has a higher density than virgin polystyrene.

The high-density core particles in a solid state are dispersed in water, and then polymerized into a core-shell structure by coating virgin styrene in a liquid state thereon. After the polymerization has proceeded by 80% or more, a blowing agent in a liquid state is added and impregnated. At this time, the liquid-state blowing agent is partially and non-uniformly impregnated into the core portion in a solid state, whereas the liquid-state blowing agent is uniformly and largely impregnated into the shell portion in which polymerization is in progress in a liquid state. Due to the difference in material state (solid or liquid) between the core and the shell, a difference in the concentration of the absorbed blowing agent occurs. In addition, due to the density difference between the core and the shell portions, when expansion is carried out under the same conditions and with the same amount of blowing agent as in conventional virgin expandable polystyrene particles having a single spherical shape, expansion starts from the shell, which is the lower-density portion, thereby forming a foam having a structure different from that of a virgin expandable polystyrene foam.

As shown in FIG. 2, since the core has a higher density than the shell, expansion proceeds due to over-expansion of the relatively low-density shell until the particles come into contact with neighboring particles, thereby ultimately forming a foam having irregular expanded particles having a substantially polygonal shape. Accordingly, gaps between the respective irregular particles are reduced, and spaces through which moisture may penetrate during a water-cooling process in the expansion/molding process are reduced, thereby providing an effect of reducing moisture content. Due to the moisture-content reduction effect according to the present invention, the moisture content (residual moisture amount) may be 5% or less, and more preferably 3.5% or less.

In contrast, in the case of conventional expandable polystyrene particles having a single circular shape, the entirety thereof has the same density. Therefore, when the particles are expanded by introducing a blowing agent, spherical expansion occurs, thereby increasing gaps between the particles. As a result, moisture penetrates during a water-cooling process in the expansion/molding process, thereby increasing the moisture content.

Hereinafter, **a method for manufacturing expandable polystyrene particles according to the present invention and an expandable polystyrene foam (molded article) manufactured therefrom will be described.**

The method for manufacturing expandable polystyrene particles according to the present invention comprises:

preparing an ingot through a volume-reduction treatment in which heat or pressure is applied to polystyrene foam to reduce the volume thereof; extruding the prepared ingot to prepare a core pelletized to a predetermined size; and introducing the core and a styrene monomer into a reactor and then performing suspension polymerization to manufacture polystyrene particles having a core-shell structure.

First, the core is preferably manufactured from waste polystyrene foam. More specifically, an ingot is manufactured by collecting and washing a waste raw material (waste polystyrene foam), and performing a volume-reduction treatment thereon, that is, reducing the volume by removing a blowing-agent gas through heating or pressurization.

Next, the manufactured ingot is pelletized to a predetermined size by pulverization or re-extrusion, thereby manufacturing core (seed) particles.

Next, suspension polymerization is performed in order to manufacture a shell through coating from the manufactured core particles. The suspension polymerization may comprise: (1) dispersing the core particles in a solvent together with an inorganic surfactant, a suspending agent, a dispersant, an emulsifier, or the like; (2) coating and polymerizing a monomer on seed particles through a styrene-based monomer, an initiator, an organic surfactant, or the like, thereby growing the seed particles; (3) impregnating a blowing agent into the produced polystyrene particles under high temperature and high pressure in order to form expandable polystyrene; and (4) adding a stabilizer, a reaction terminator, or the like and washing the same in order to obtain polystyrene impregnated with the blowing agent.

As the blowing agent, n-pentane, cyclo-pentane, isopentane, or the like may be used, but the blowing agent is not necessarily limited thereto. The blowing agent may be included in an amount of 1 to 10 wt%, and preferably 3 to 8 wt%, based on the manufactured expandable polystyrene (EPS) particles.

After the expandable polystyrene (EPS) particles are manufactured, pre-expansion (20 to 80 times expansion) is performed under appropriate steam pressure conditions, beads suitable for a desired density are injected into a mold having a predetermined shape, and expansion and molding are then performed under appropriate steam pressure conditions, thereby manufacturing an expandable polystyrene foam (molded article).

For reference, when manufacturing the core, in the volume-reduction treatment, heat or pressure, generally heat equal to or higher than the glass transition temperature (Tg), is applied to waste expanded polystyrene foam to remove pores and reduce the volume. During this process, a decrease in molecular weight occurs due to degradation of polystyrene. In addition, heat equal to or higher than the glass transition temperature (Tg) is again applied to the ingot formed through the volume-reduction process, and pelletization is performed after melt extrusion. In general, when the molecular weight decreases due to degradation of a polymer, mechanical strength decreases, and thus such pellets have deteriorated physical properties compared with virgin polystyrene.

In addition, a decrease in the molecular weight of polystyrene occurs again in a process of heating the pellets again to a temperature equal to or higher than the glass transition temperature (Tg) and melting the pellets.

In order to prevent such a decrease in molecular weight, an antioxidant may be added during the volume-reduction treatment or the pelletization process.

The antioxidant may be selected from phenolic compounds such as *2,6-di-tert-butyl-4-methylphenol, styrenated phenol, n-octadecyl 3-(3,5-di-tert-butyl-4-hydroxyphenyl)propionate,* and *2,2'-methylenebis(4-methyl-6-tert-butylphenol),* and amine compounds such as *phenyl-α-naphthylamine, phenyl-β-naphthylamine,* and *N,N'-diphenyl-p-phenylenediamine,* and may also be selected from phosphorus-based compounds such as *tris(2,4-di-tert-butylphenyl) phosphite, bis(2,4-di-tert-butylphenyl) pentaerythritol diphosphite,* and *bis(2,4-dicumylphenyl) pentaerythritol diphosphate,* and sulfur-based compounds such as *dilauryl thiodipropionate, distearyl thiodipropionate, and ditridecyl thiodipropionate,* but is not limited thereto.

### [Examples]

### Example 1: Preparation of Recycled Expandable Polystyrene (EPS) Particles Having a Core-Shell Structure

### (1) Preparation of Core Seeds from Waste Polystyrene Foam

An ingot was manufactured by subjecting collected waste polystyrene foam to a volume-reduction treatment under conditions of a temperature of 90 to 150°C and a pressure of 10 to 25 kg/cm2. The ingot was then pulverized to prepare primary pellets having a diameter and a length of about 3 mm. Thereafter, through an additional extrusion process using a die hole having a size of 1 mm or less, micro-pelletized core seeds having a diameter and a length of about 0.85 mm were prepared.

### (2) Preparation of Recycled Expandable Polystyrene Particles (Beads)

Distilled water (DI water) in an amount of 1.14 kg, 0.66 kg of the prepared recycled expandable polystyrene core seeds, 7.2 g of tricalcium phosphate, and 0.054 g of sodium dodecylbenzenesulfonate were introduced into a main reactor, and the mixture was heated to 75°C while being stirred. In an auxiliary reactor, 120 g of a styrene monomer, 240 g of distilled water, 0.78 g of polyvinylpyrrolidone, 0.12 g of azobisisobutyronitrile, and 1.74 g of benzoyl peroxide were added and stirred for 5 minutes at 6,000 rpm to uniformly disperse the styrene monomer. Thereafter, the styrene monomer emulsion prepared in the auxiliary reactor was continuously introduced into the main reactor at a rate of 3 g/min. Subsequently, 1.32 g of trimagnesium phosphate and 0.03 g of sodium dodecylbenzenesulfonate were additionally introduced into the main reactor, and the temperature was raised to 115°C and maintained for 2 hours, thereby finally preparing recycled expandable polystyrene (EPS) particles having a core-shell structure. The results of measuring the densities of the core and shell of the prepared expandable polystyrene particles are shown in Table 1 below. For reference, the density ratio of the core to the shell was 1.67.

**[Table 1]**

| **Classification** | **Diameter (D) [mm]** | **Radius (r) [mm]** | **Volume (V = 4/3 × πr³) [mm³]** | **Mass (M) [g]** | **Density (d = M/V) [g/mm3]** |
|---|---|---|---|---|---|
| Recycled EPS particle (core + shell) | 1.18 | 0.59 | 0.86 | 2 | 2.32 |
| Core seed (recycled) | 0.85 | 0.425 | 0.32 | 1 | 3.11 |
| Shell (virgin) | | | 0.54 | 1 | 1.86 |

### (3) Preparation of Recycled Expandable Polystyrene Foam

Iso-pentane and n-pentane, as blowing agents, were introduced into the main reactor in an amount of 336 g, pressurized under a nitrogen atmosphere at 12 kgf/cm², and maintained for 10 hours to be impregnated. After the impregnation was completed, the temperature of the main reactor was cooled to room temperature (25 to 30°C), and the blowing-agent-impregnated recycled expandable polystyrene bead particles were taken out, dewatered, and dried.

Thereafter, the prepared recycled expandable polystyrene bead particles were pre-expanded at an expansion ratio of 50 ml/g, aged in a silo under room-temperature conditions for 15 to 18 hours, and then molded using an expanded styrene resin molding machine at a steam pressure of 2 kgf/cm², thereby manufacturing a recycled expandable polystyrene foam having a density of 20 g/L.

### 2. Experimental Evaluation

### (1) Measurement of Compressive Stress and Moisture Content

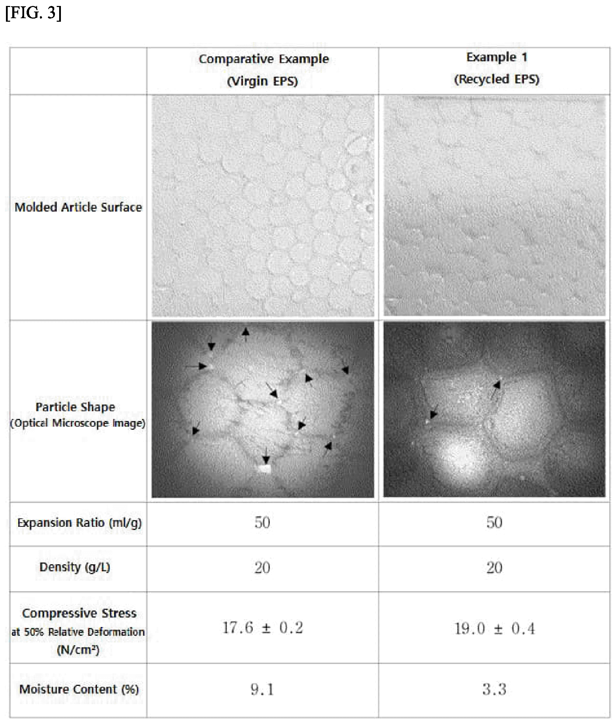

Using, as a Comparative Example, a virgin polystyrene foam (EPS B240NH 500KG FLECON) having the same expansion ratio (50 ml/g) and density (20 g/L) as the recycled expandable polystyrene foam prepared in Example 1, enlarged photographs of the surfaces and particles thereof, and measurement results of compressive stress and moisture content, were summarized as shown in FIG. 3.

It was confirmed that the compressive stress of Example 1 was 19 N/cm2, which was at an equivalent or superior level compared with the Comparative Example formed from virgin material, and that the moisture content was 3.3%, which was greatly improved compared with the Comparative Example.

This is because, while the particles of the Comparative Example (virgin EPS) have a shape close to a spherical shape, the particles of Example 1 (recycled EPS) according to the present invention form polygonal shapes. Specifically, the low-density shell is over-expanded, and expansion proceeds until the particles come into contact with neighboring particles, so that the expanded particles have a shape close to a polygonal shape. As a result, gaps between the polygonal particles are reduced, and spaces through which moisture may penetrate during a water-cooling process in the expansion and molding process are reduced, thereby reducing the moisture content.

### (2) Measurement of Moisture Content According to Core-Shell Density Ratio

In order to confirm the moisture content according to the core/shell density ratio of recycled expandable polystyrene particles (beads) having a core-shell structure, respective recycled expandable polystyrene (EPS) particles having the core seed and bead diameters shown in Table 2 were prepared, and then the moisture content according to the core and shell density ratio was measured.

**[Table 2]**

| | **Core Diameter (D) [mm]** | **EPS Bead Diameter (D) [mm]** | **Core Density / Shell Density [times]** | **Moisture Content (%)** |
|---|---|---|---|---|
| **Comparative Example** | - | 1.00 | 1.00 | 9.1 |
| **Example 1** | 0.85 | 1.18 | 1.67 | 3.3 |
| **Example 2** | 1.00 | 1.40 | 1.74 | 3.1 |
| **Example 3** | 0.71 | 1.00 | 1.80 | 2.9 |
| **Example 4** | 0.60 | 0.85 | 1.84 | 3.0 |

As a result of the measurement, the core density/shell density ratio of Examples 1 to 4 was 1.67 to 1.84 times, and it was confirmed that Examples 1 to 4 according to the present invention had significantly superior moisture content compared with the Comparative Example having a single circular shape.

## Claims

1. An expandable polystyrene particle comprising a core of a polystyrene material and a shell of a polystyrene material, the shell coating the core,
wherein the density of the core is greater than the density of the shell.

2. The expandable polystyrene particle according to claim 1,
wherein the density of the core is 1.2 to 2.0 times the density of the shell.

3. The expandable polystyrene particle according to claim 1,
wherein the core is manufactured from waste polystyrene foam.

4. The expandable polystyrene particle according to claim 3,
wherein the core is formed by pulverizing or re-extruding an ingot formed through a volume-reduction treatment in which a predetermined amount of heat is applied to the waste polystyrene foam.

5. The expandable polystyrene particle according to claim 3,
wherein the shell is formed by polymerizing a styrene monomer on the core.

6. A polystyrene foam formed by expanding the expandable polystyrene particle according to claim 1.

7. The polystyrene foam according to claim 6,
wherein the polystyrene foam has a moisture content of 5% or less.

8. A method for manufacturing the expandable polystyrene particle according to claim 1, the method comprising:
preparing an ingot through a volume-reduction treatment in which heat or pressure is applied to a polystyrene foam to reduce the volume thereof;
extruding the prepared ingot to prepare a core pelletized to a predetermined size; and
introducing the core and a styrene monomer into a reactor and then performing suspension polymerization to manufacture an expandable polystyrene particle having a core-shell structure.

9. The method according to claim 8,
wherein an antioxidant is added during the volume-reduction treatment or a process of pelletizing the core.

10. A method for manufacturing an expanded polystyrene molded article, the method comprising:
pre-expanding and aging the expandable polystyrene particle manufactured according to claim 9; and
foam-molding the aged polystyrene particle in a molding machine under a predetermined pressure.
